Europäisches Patentamt

European Patent Office

Office européen des brevets

(19)

(11) Publication number: **0 287 182**

**A1**

(12) **EUROPEAN PATENT APPLICATION**

(21) Application number: 88200715.6

(51) Int. Cl.⁴: **H02N 11/00**

(22) Date of filing: 13.04.88

(30) Priority: 13.04.87 NL 8700869
04.08.87 NL 8701835
14.09.87 NL 8703016
09.03.88 NL 8800588

(43) Date of publication of application:
**19.10.88 Bulletin 88/42**

(84) Designated Contracting States:
**AT BE CH DE ES FR GB GR IT LI LU NL SE**

(71) Applicant: **Zielinski, Adolf Herbert Astor
De Sikkel 56
NL-5384 HS Heesch(NL)**

(72) Inventor: **Zielinski, Adolf Herbert Astor
De Sikkel 56
NL-5384 HS Heesch(NL)**

(74) Representative: **Baarslag, Aldert D. et al
Nederlandsch Octrooibureau Johan de
Wittlaan 15 P.O. Box 29720
NL-2502 LS Den Haag(NL)**

(54) Method and apparatus for converting energy from the surroundings into electric energy.

(57) A method and an apparatus for converting kinetic energy present in the surroundings into electric energy. Said kinetic energy in the form of magnetic energy is converted by means of suitable magnetic flux variations brought about in or near an electrical conductor. Means are provided for generating said magnetic flux variations, and an electromotive force is generated in the one electrical conductor. Another electrical conductor, which is preferably superconducting, may be provided in order to assist in generating magnetic flux variations.

fig-7

EP 0 287 182 A1

## Method and apparatus for converting energy from the surroundings into electric energy.

The invention relates to a method for converting kinetic energy present in the surroundings into electric energy, in which the kinetic energy is converted by means of magnetic flux variations, brought about in or near an electrical conductor, into electric energy in said electrical conductor. Preferably use is made of kinetic energy, which is present in the surroundings in the form of magnetic energy to generate an electromotive force in the electrical conductor.

The invention also relates to an apparatus for converting kinetic energy present in the surroundings into electric energy, which apparatus is provided with an electrical conductor and means for generating magnetic flux variations in or near an electrical conductor, for generating from the kinetic energy present in the surroundings, into electric energy in the electrical conductor. Preferably, from the kinetic energy, present in the surroundings in the form of magnetic energy, an electromotive force is generated in the electrical conductor.

It is known from the physics of particles that gravitons can convert, inter alia, into photons as they pass through space and matter, as a result of which energy is released. These photons occur both in space and in matter and they represent energy, i.e. kinetic energy. Said photons, inter alia, determine the mutual interaction between electrons, and said electrons can both emit and receive photons.

As is known also electron spin moments can be directed in a material by the technique of permanent magnetization, as a result of which kinetic particles, among which photons, released also start to flow through the material in a direction, the so-called magnetization direction. The disturbed energetic balance is restored by a field of kinetic particles in the surroundings of the material directed along the known magnetic field lines outside the material.

Likewise in the case of an electron current through an electrical conductor, a flow of kinetic particles flowing along the magnetic lines of force will likewise be produced outside or around the conductor. By winding the electrical conductor into the form of a coil, a flow of particles can likewise be produced which is comparable to the flow of particles in the case of a permanent magnet and so a concentrated field of particles is obtained.

In the method and apparatus of present invention use is made of abovementioned phenomenon, in which the external field of kinetic particles is influenced such that the energy thereof is absorbed in an electrical conductor. This absorption of kinetic particles energy, among which also heat, can be obtained by means of the application of a suitable stationary field and/or a variable magnetic field.

For example by varying or pulsing the electron current through the electrical conductor in the current direction at high frequency, the photon field, which compensates for the balance around the conductor, becomes active to such an extent that photons are absorbed from the surroundings into the electrons in the electrical conductor. As a result, energy is taken up from said surroundings into said electron current.

The invention will be explained on the basis of some embodiments as examples, reference being made to the drawings in which:

Figure 1 is a reproduction in side view of a first embodiment of the apparatus according to the invention;

Figure 2 is a section along the line II-II through the apparatus of Fig. 1;

Figure 3 is a similar section along the line III-III through the apparatus of Figure 1;

Figures 4a and 4b are diagrammatic reproductions of the magnetic fields encountered during operation in the apparatus of Figure 1;

Figure 5 is a vector diagram of the energies encountered;

Figure 6 is a reproduction in plan view of a variant of the apparatus of Figure 1;

Figure 7 is a section along the line VII-VII through the apparatus of Figure 6;

Figure 8 is a diagrammatic reproduction in side view of yet another variant of the apparatus of Figure 1;

Figure 9 is a section along the line IX-IX through the apparatus of Figure 8;

Figure 10 is a similar section along the line X-X through the apparatus of Figure 8;

Figure 11 is a diagrammatic reproduction of the flow of the magnetic field lines in the apparatus of Fig. 8 at a particular instant;

Figure 12 is a similar reproduction at a subsequent instant when the alternating current through the primary coil has just reversed;

Figures 13a and 13b are respectively a plan view and a section of a second embodiment of the apparatus according to the invention which is an electric energy source for higher current intensities but lower voltages;

Figures 14a and 14b are respectively a plan view and a cross-section of a variant of the apparatus of Figures 13a and b;

Figure 15 is a diagrammatic reproduction of a third embodiment of the apparatus according to the invention as a magnetic core resonance converter;

Figures 16a and 16b are respectively a side view and a cross-section of the apparatus of Figure 15;

Figure 17 is a diagrammatic reproduction of a fourth embodiment of the apparatus according to the invention as a hybrid energy absorption transformer; and

Figures 18a and 18b are respectively a plan view and a cross-section of the apparatus of Fig. 17;

In the first embodiment according to the invention, an energy converter is provided, in which the alternating current flowing in an electrical conductor generates a changing magnetic field. The resultant of this alternating magnetic field and the magnetic field of a permanent magnet is therefore also subject to changes. As a result of this changing resultant field, an electromotive force is induced in a second electrical conductor. Such an electromotive force as large as possible is pursued in an optimal manner through a suitable selection of the set-up of the electrical conductor(s) and permanent magnet. The permanent magnet does not necessarily need to be part of the apparatus; the earth magnetic field, for example, can be utilized for above purpose.

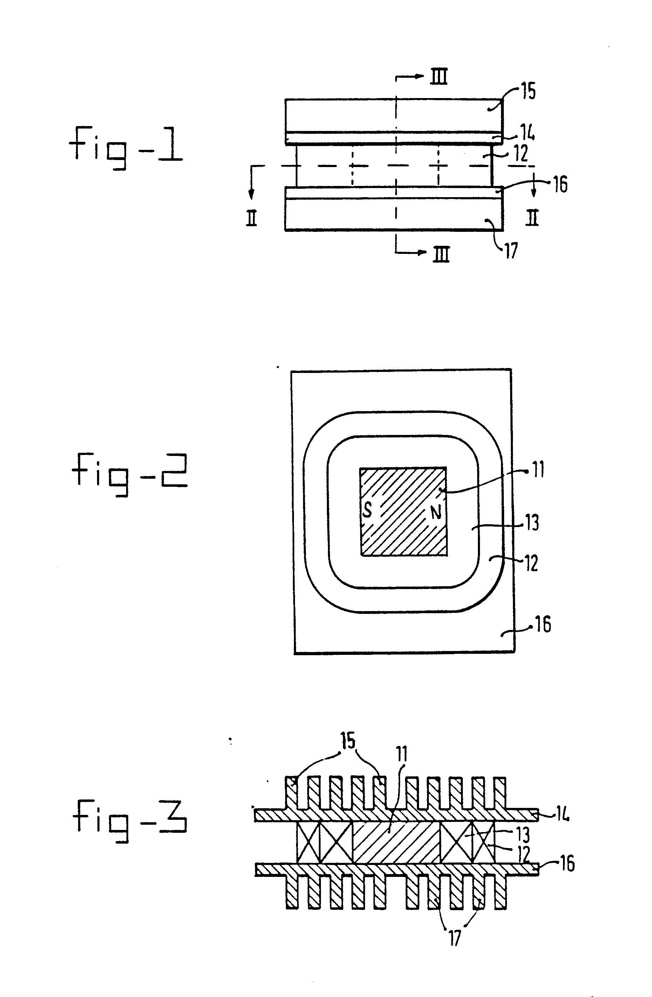

Figures 1-3 show an example of said first embodiment of the apparatus according to the invention. In this apparatus a permanent magnet 11 is set up in the space which remains open inside a secondary coil 13 which is itself concentric with, and inside, a primary coil 12. The connecting wires of said two coils 11 and 12 are not depicted. The magnet 11 is set up within the system of coils 12 and 13 in a manner such that the magnetic axis lies in a plane parallel to the planes which bound the coils at the top and bottom. The primary coil in this first embodiment and all its variants can be a superconducting winding.

The system of permanent magnet 11 and coils 12, 13 is accomodated between two plates 14 and 16 of a suitable heat-conducting material, which plates are provided with ribs 15 (on plage 14) and 17 (on pate 16) standing perpendicularly thereon. The plates and ribs may consist, for example, of copper or aluminium.

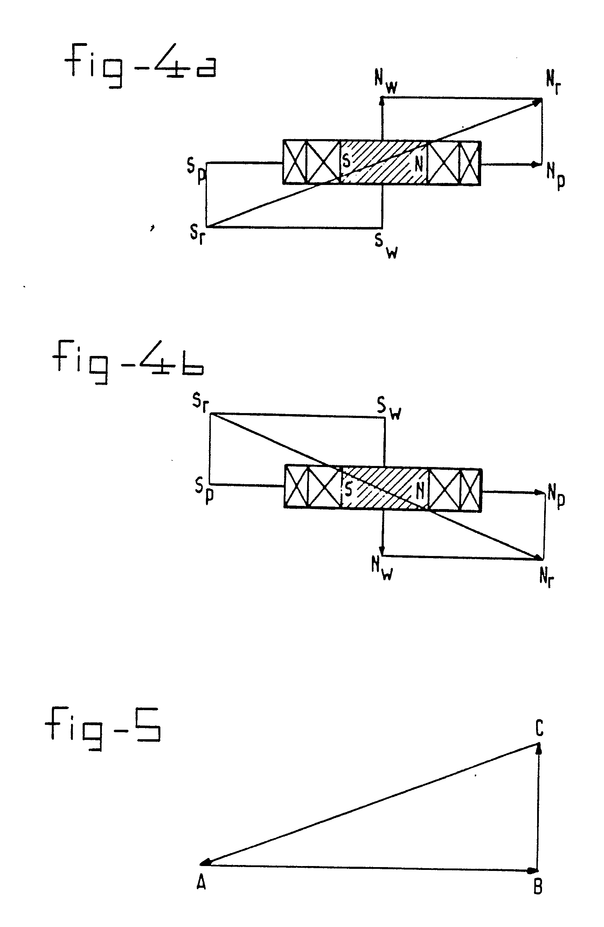

If an alternating current is passed through the primary coil 12 during operation, as shown in Figures 4a and 4b, an alternating magnetic field $N_w$-$S_w$ is generated. The field of the permanent magnet 11 is indicated in the figure by $N_p$-$S_p$. The resultant of the two magnetic fields is an alternating magnetic field $N_r$-$S_r$, the vector of which always traverses the secundary coil. This resulting alternating field induces a voltage in the secondary coil 13.

Fig. 5 shows a vector diagram of the energies involved. The vector AB represents the energy of the permanent magnet. At the same time, the vector BC is the energy supplied via the primary coil and the vector CA is the energy which may be drawn from the secondary coil. Since the energy to be drawn is larger than the energy supplied via the primary coil, energy will be drawn from the surroundings for example in the form of heat via the permanent magnet 11. A permanent supply of heat is therefore necessary, and this is achieved by the system of plates with transverse ribs on either side of the system of coils and magnet.

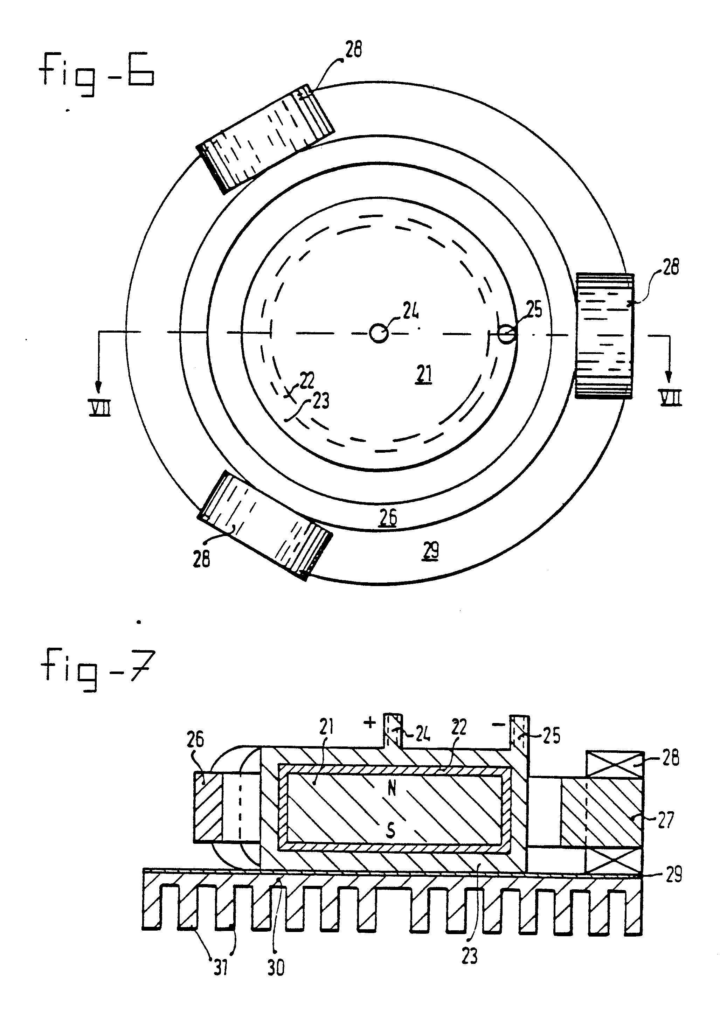

Figures 6 and 7 show respectively a plan view and a cross-section of a variant of the first embodiment of the apparatus according to the invention. In this variant a cylindrical magnet 21, surrounded by a suitable insulation 22, is accomodated in a can-type body 23 composed of a suitable electrically conducting material, for example of copper. The can 23 is essentially formed by two parallel plates or discs which are joined to each other by a strip-type ring. The plate which forms the top surface of the can 23 is provided with a terminal 24 in the centre and with yet another terminal 25 at the edge.

An annular body 26 is set up at some distance therefrom around the can 23. Three coils 28 are st up symmetrically around the ring 26 on suitable projections 27. The coils 28 are connected to a three-phase generator in a manner not shown. During operation, the coils are thus successively energized so that a rotating magnetic field or flux is obtained as a resultant of the flux generated in the coils and the stationary flux of the permanent magnet. As a result of the rotation of the magnetic flux, an electric potential is produced in the conductor, i.e. the copper can 23, according to the same principle as that of the homopolar Faraday generator. The electric energy thus generated is drawn, on the one hand, from the three-phase generator which energizes the coils, and, on the other hand, from the surroundings, so that cooling occurs. In order to supply the necessary heat, the can 23 is therefore connected via an electrically insulating intermediate layer 29 to a disc 30 composed of suitable material, for example aluminium. Said disc is provided with ribs or so-called heat-supply ribs 31.

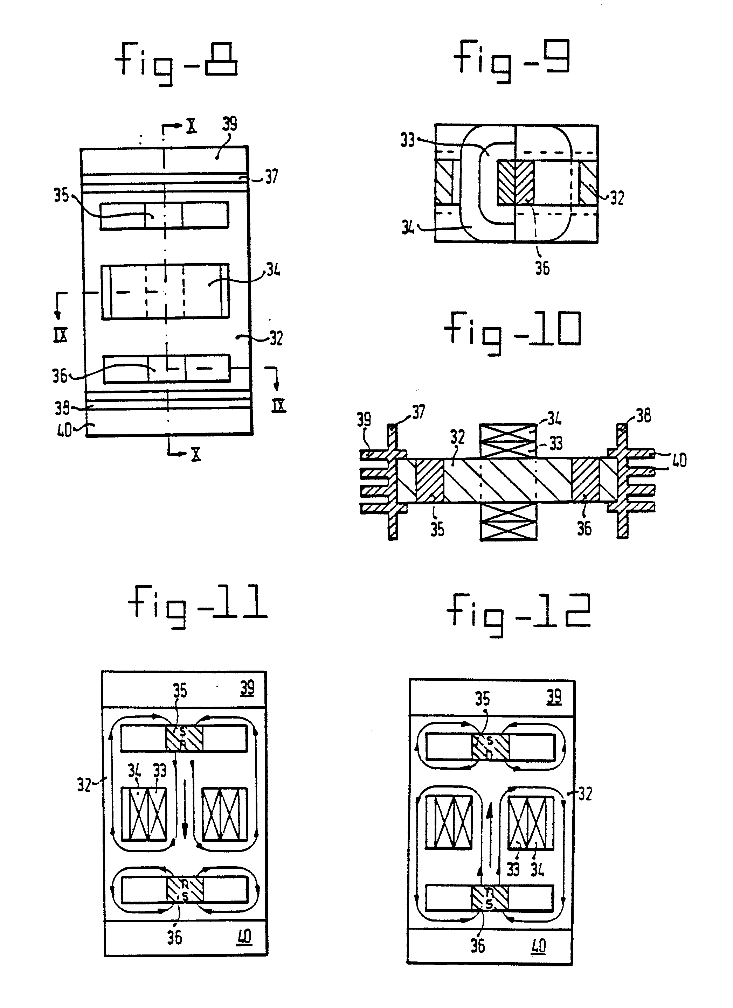

Figures 8 to 10 show in side view and in section yet another variant of the first embodiment of the apparatus according to the invention. In this variant the conductors, i.e. two coils 33 and 34 set up concentrically in each other, are held in a suitable supporting structure 32, the connecting wires of which coils are not depicted. Above and below the plane of the coils two permanent magnets 35 and 36 directed towards each other are set up in the supporting structure 32, which magnets provide a stationary magnet field. The magnetic axes virtually or completely coincide with each other and with the axis of the coils 33 and 34. Here the term directed towards each other is understood to mean that either the north pole or the south pole of each of the magnets is situated at the side of the magnet facing the coils.

On either side of the supporting structure 32, the latter is connected to a heat-supply system consisting of a metallic plate 37 and 38 on which the transverse ribs 39 and 40 respectively are provided.

Figures 11 and 12 show diagrammatically the apparatus according to Fig. 8. Said figures likewise indicate the flow of the magnetic field lines at two consecutive instants in the passage of an alternating current though the primary coil 33. At the first instant (Fig. 11) the current has a particular direction so that a magnetic field is generated with, as it were, a north pole below the plane of the coils. This field is intensified by the magnet 35 above the coils and counteracted by the magnet 36. At the consecutive instant (Fig. 12), the direction of the current through the primary coil 33 is reversed and a magnetic field is generated with, as it were, a south pole below the plane of the coils. This field is precisely opposite to the field at the previous instant. The field is intensified by the magnet 36 below the coils and counteracted by the magnet 35. The effect of the fields thus formed on the secondary coil 34 is the same as if a permanent magnet is alternately inserted into the coil 35 and removed again therefrom. In this manner, an electromotive force is induced in the coil 34. The power to be delivered by the secondary coil is greater than the power taken up by the coil 33 as a result of the intensifying effect of the permanent magnets. The difference is drawn from the surroundings in the form of heat via the heat-supply structure.

In the second embodiment of the apparatus according to the invention, an electromagnetic cell is provided with which the magnetic energy derived from a permanent magnet is brought into turbulency and is converted into electric energy by electromagnetic induction. As a result of this, a direct voltage source is obtained with a large density of energy and a long service life for delivering fairly high electric voltages and/or fairly high electric currents.

Recent developments in the field of magnetic ceramic materials such as those, for example, based on neodymium, boron or iron (Nd, B or Fe) (cf. for example, S. Cedighian, Die magnetischen Wirkstoffe, VDI-Verlag, Düsseldorf) have made it technically possible to cause the magnetic energy to flow at any desired angle or in any desired direction with respect to a conductor, for example an electrical coil. As a result of this, magnetic turbulences and fluctuations, which were hitherto possible only by adding mechanical or electric energy, can be generated in conductors.

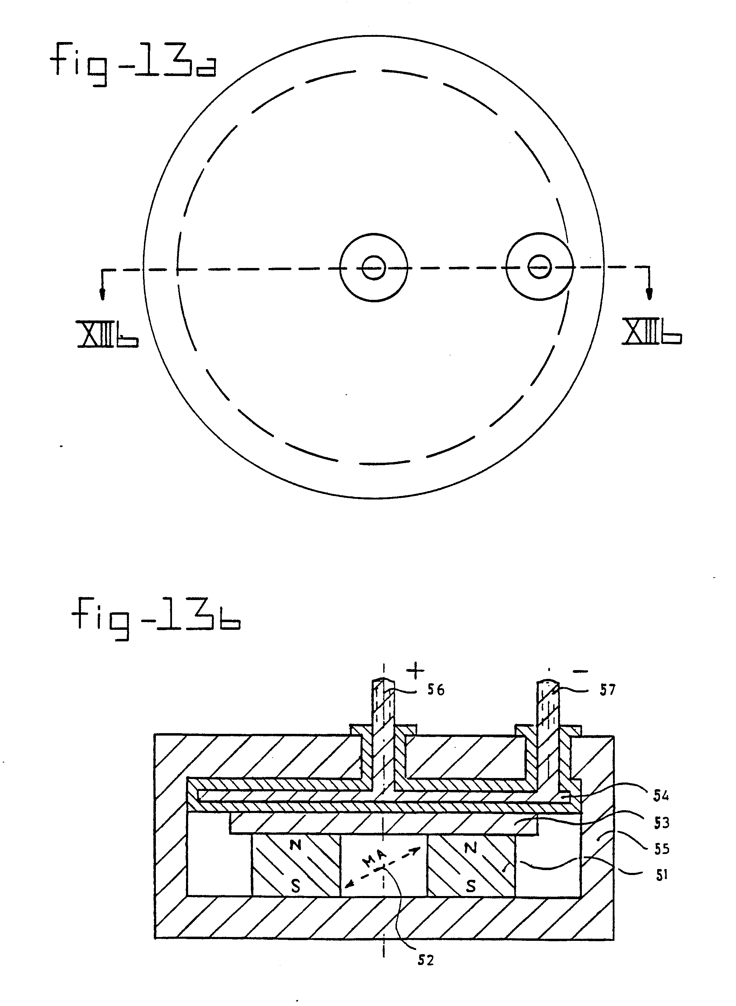

In the cell indicated in Figures 13a and 13b, the magnetic energy originating from the permanent annular magnet 51 is brought into rotation and turbulency because the magnetization direction of the permanent magnet 51 is caused to make an angle with the normal to the pole face of said magnet which is greater than zero degrees. Said magnetization direction is indicated by the broken arrow 52. The magnetic turbulence brought about as a result of this is intensified by the ferrite disc 53. The conductor, i.e. the copper disc 54, which is fitted in an insulated manner in the round cantype body 55 composed of ferritic iron, is provided with a copper pin 56 in the middle of the disc and a second pin 57 at the edge of the disc.

Starting from the north pole of the permanent magnet 51, the path of the magnetic flux passes across the disc 53 through the conductor 54 and then via the can-type body 55 back to the south pole of the permanent magnet 51.

As a consequence of the already mentioned rotation of the magnetic field (magnetization direction), the conductor 54 is cut by these magnetic force lines which produce turbulence. As a result, depending on the direction of rotation of the magnetic field, an electric potential is produced between the ends of the conductor 54, as a result of which an electric current is able to flow via the pins 56 and 57 if the electric circuit is closed.

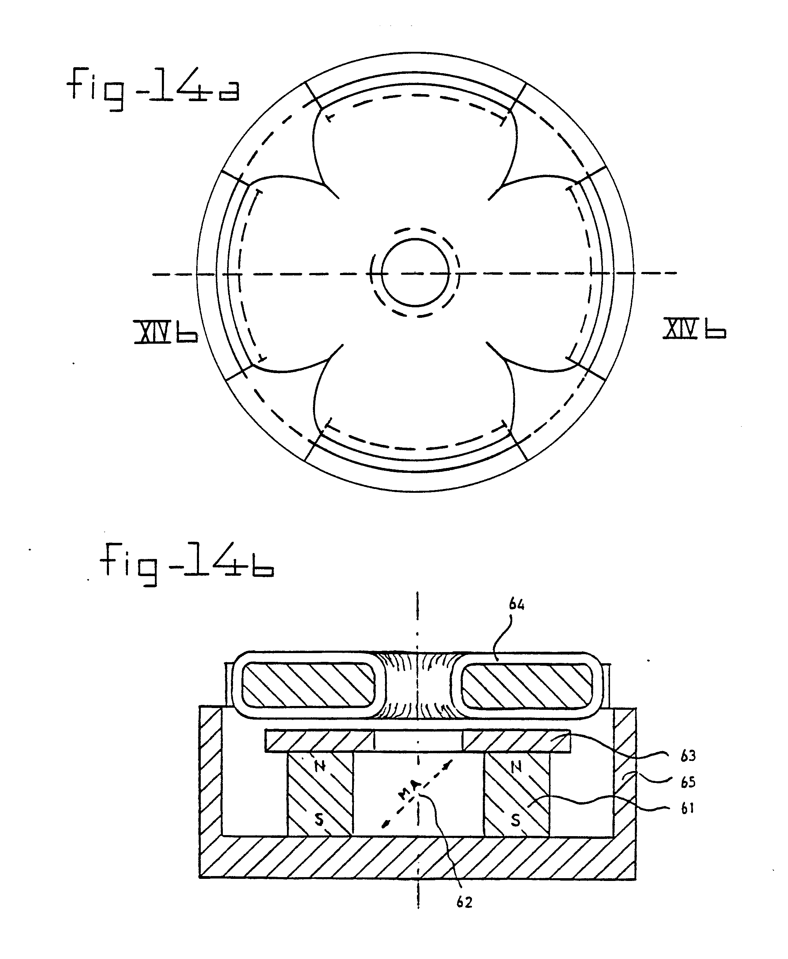

The variant of the second embodiment of the apparatus according to the invention shown in Figures 14a and 14b is in principle identical to the second embodiment indicated in Figures 13a and 13b with the difference that the conductor 14 now consists of insulated copper windings 64. These are provided round a ferritic iron core which forms part of the round can-type body 65. Because the magnetic force lines of the permanent magnet 61 cut the copper windings, an electric potential is produced at the ends of the copper windings.

In the third embodiment according to the invention an electromagnetic core resonance converter is obtained by means of which magnetic energy is drawn from the surrounding and by means of core resonance is converted into electric energy.

In this third embodiment use is made of a magnetic or magnetizable medium inside the primary and secondary windings of a core resonance converter in which magnetic core resonance occurs. The primary winding in this third embodiment may be superconducting.

Such an energy converter consisting of two electrical coils with a common magnetic or magnetizable medium in between is usually referred to as a transformer. Such an energy transformer can be fed with a sinusoidal alternating voltage having a mains frequency between 16 2/3 Hz and 60 Hz. Such transformers have the disadvantage that they have heat losses in the energy transfer which are known under the designation of copper and iron losses and which adversely affect the efficiency of the transformer. Transformers used in this manner are capable only of converting the electric energy supplied into magnetic energy and subsequently of converting said magnetic energy back into electric energy of different voltage and current. The electric energy delivered is in this case always less than the electric energy supplied.

In electric energy transfer, it is avoided to use a frequency which lies around and near the natural nuclear magnetic resonance frequency of the transformer since at this frequency the electric energy absorbed increases sharply with the electric power delivered being the same, and this would mean a considerable loss in efficiency.

Investigations relating to the mechanism which causes the sudden increase in the energy loss on reaching the magnetic core resonance frequency of the transformer have resulted in the discovery of the opposite phenomenon. Namely that the electric energy absorbed suddenly decreases markedly with the energy delivered remaining constant on reaching the magnetic core resonance frequency if the transformer and the electrical signal supplied have certain specific properties. The fact is that in that case it has emerged that the transformer absorbs energy from the surroundings and converts this ambient energy into electric energy so that the total quantity of electric energy delivered is greater than the electric energy supplied.

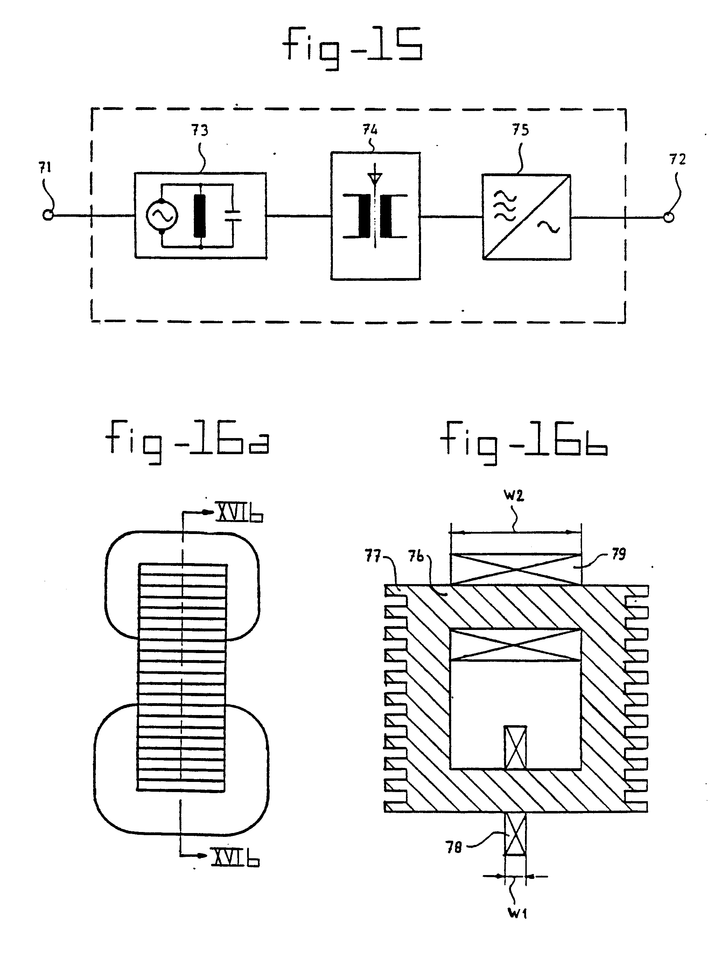

Figure 15 shows a diagrammatic reproduction of the three essential components of this third embodiment as a magnetic core resonance converter, viz. a signal generator 73, an energy absorption transformer 74 and an electronic frequency converter 75. Electric energy, for example 220 V/50 Hz is supplied to the input 71. This power is processed electronically in the signal generator 73 to produce a signal such that magnetic nuclear or core resonance is produced in the magnetic medium of the energy absorption transformer 74 when the latter is fed with said signal.

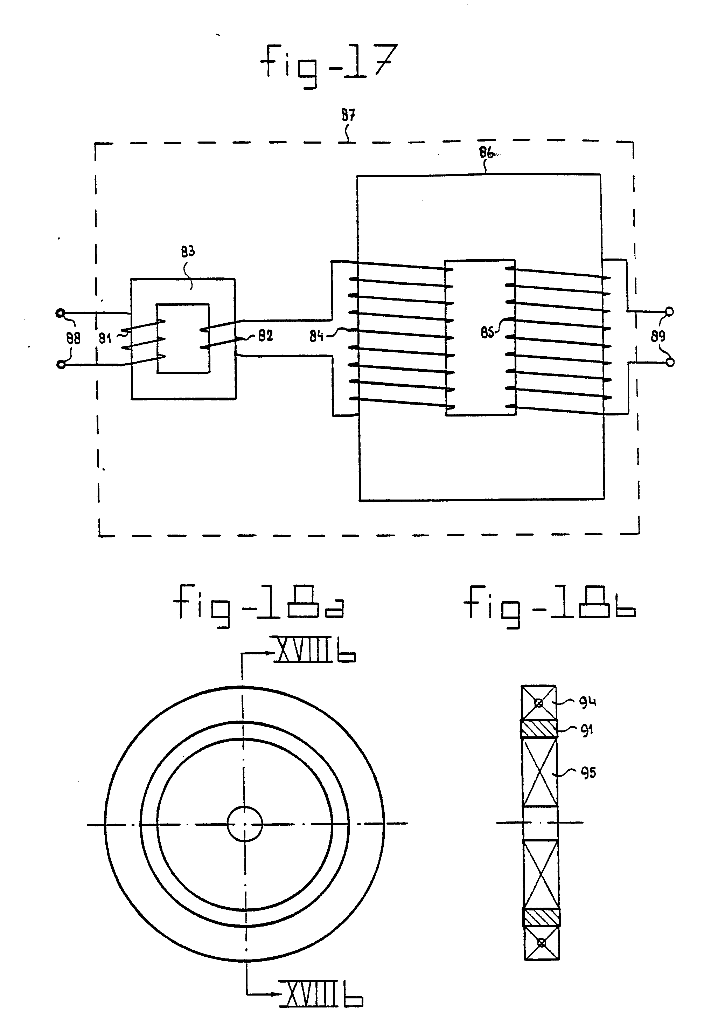

Figure 16a shows a side view and Figure 16b shows a cross-section of the energy absorption transformer in which the energy absorption and conversion takes place. The core 71 preferably consists of laminated soft iron or ferritic material or of another suitable magnetic or magnetizable medium. The core is provided with energy absorption ribs 77. The width w1 of the primary resonance coil 78 should be as small as possible. The secondary energy coil 79 must preferably be placed opposite the primary resonance coil 78. In designing the secondary energy coil, the chosen width w2 has to be as large as possible.

Because of the magnetic core resonance in the energy absorption transformer 74, an electric sinusoidal voltage having a frequency which corresponds to the magnetic core resonance frequency is induced in the secondary energy coil 79. This generated electric power is supplied to an electronic frequency converter 75 and is converted into a desired voltage and frequency and delivered via the output 72.

By suitably matching the signal at the output 72 to the signal at the input 71, the signal generator 73 can be fed from the output 72. As a result of said feedback a virtually independent electric energy source is obtained. A second other voltage source is only necessary to trigger the magnetic core resonance converter.

In the fourth embodiment according to the invention, an energy absorption transformer is provided with which magnetic energy is drawn from the surroundings by means of a superconducting coil and is converted into electric energy by means of electromagnetic induction.

Superconductors have already been known for some time and are often used to generate strong magnetic fields. The great advantage in the case of magnets with superconducting coils is that strong magnetic fields can be generated with low energy absorption. The magnetic energy generated with superconducting coils can be converted into electric energy by suitable designs. Although the superconducting wires which are at present available have to be subjected to considerable cooling, for example with liquid nitrogen, to achieve the superconducting properties, it may be anticipated that superconductors will be available in the near future which will be employable in practice, even at higher temperatures.

The energy conversion achieved in the fourth embodiment according to the invention is brought about by means of magnetic flux variations in a hybrid energy absorption transformer. Said transformer consists in a superconducting primary winding and a non-superconducting secondary winding of, for example, normal copper wire. The use of the said hybrid energy absorption transformer according to the invention has the advantage that the electric energy delivered from the secondary winding of the transformer is significantly greater than the electric energy absorbed by the primary winding of the transformer, and this implies an amplification of the electric energy supplied.

The Figures 17 and 18 of the fourth embodiment are only intended to clarify and explain the method and apparatus according to the invention. The invention is not restricted to the application shown and many variations which are based on the same principle are possible for those skilled in the art.

Figure 17 gives a diagrammatic reproduction of two essential components of this electromagnetic converter according to the invention. This comprises a small usual electric or activating transformer consisting of a primary winding 81, for example, manufactured from insulated copper wire or another suitable electrical conductor, and a secondary winding 82, likewise preferably manufactured from insulated copper wire or another suitable conductor, and a core 83 of preferably laminated soft iron (transformer sheet) or another magnetic or magnetizable medium which connects the two coils 81 and 82 inductively.

This embodiment furthermore contains a larger power transformer consisting of a primary winding 84 of insulated superconducting wire which is electrically connected to the secondary winding 82 of the activating transformer and a secondary power winding 85 which is non-superconducting and which preferably consists of insulated copper wire or another suitable electrical conductor. The windings 84 and 85 are inductively connected to each other by means of the core 86 which is preferably manufactured from laminated soft iron (transformer sheet) or another suitable magnetic or magnetizable medium. The usual or activaating transformer and the power transformer are both contained in a suitable housing as a protection against magnetic stray fields. The electric energy is fed to the connecting terminals 88 and the electric power generated is removed via the terminals 89.

To clarify the operation of this embodiment according to the invention, the following dimensioning of the transformer windings is given using Figure 17 as an example, the iron cores being dimensioned in accordance with the manner usual for transformers:
- winding 81: 100 windings, 220 V/50 Hz, 5 A at full load;
- winding 82: 1 winding, 5000 A;
- winding 84: 1000 windings, 5000 A;
- winding 85: 1100 windings, 4500 A, 220 V/50 Hz.

From the above example it is evident that, with a coil 82 having 5000 ampere windings, a flux variation of 5000000 ampere windings can be generated with the superconducting coil 84. Accordingly, a generated power of 990 kW can be drawn from the terminals 89 for a power supplied to the connecting terminals 88 of 1.1 kW, and this corresponds to a power gain of approximately a factor of 1000.

In the variant indicated in Figure 18 of this fourth embodiment, a two-phase system has been assumed. In a further variant of this embodiment, the latter can also be constructed according to a three-phase system. In the above described variant, a mains frequency of 50 Hz has also been assumed. These embodiments may, however, also be used for other frequencies.

At very high frequencies, use may preferably be made of a hybrid transformer having ferritic or air core as indicated in Figures 18a and 18b. Of the two coils, the superconducting coil 94 should preferably have the largest diameter. The power coil 95, which is preferably manufactured from insulating copper wire or another suitable conductor, is separated electrically and thermally from the superconducting coil 94 by the insulator 91.

Those skilled in the art will be able to conceive various further variations for all these embodiments to the invention which are based on the same principle and the same method.

## Claims

1. A method for converting kinetic energy present in the surroundings into electric energy, in which said kinetic energy is converted, by means of magnetic flux variations brought about in or near an electrical conductor, into electric energy in the electrical conductor.

2. A method according to claim 1, characterized in that said kinetic energy, present in the surroundings in the form of magnetic energy, is converted by means of the magnetic flux variations in order to generate an electromotive force in the electrical conductor.

3. An apparatus for converting kinetic present in the surroundings into electric energy, provided with an electrical conductor, and with means for generating magnetic flux variations in or near the electrical conductor, for generating, from the kinetic energy present in the surroundings, of electric energy in the electrical conductor.

4. An apparatus according to claim 3, characterized in that from said kinetic energy present in the surroundings in the form of magnetic energy, an electromotive force is generated in the electrical conductor.

5. An apparatus according to claim 4, provided with another electrical conductor for conducting a variable electric current, and a stationary magnetic field, characterized in that the one and the other electrical conductor are set up such that, during operation, the other conductor generates a magnetic field which, together with the stationary magnetic field, creates a variable resultant field so that an electromotive force is generated in the one electrical conductor.

6. An apparatus according to claim 5, characterized in that both electrical conductors are two coils set up essentially in a plane inside each other, the magnet axis of the coil, formed by the other conductor, of which is substantially rectangular to said plane, and that the stationary magnetic field is produced by a permanent magnet, which is set up in said plane inside the two coils with the magnetic axis of the permanent magnet substantially directed in said plane.

7. An apparatus according to claim 6, characterized in that the system of the permanent magnet and both coils is accomodated between two metallic plates provided with transverse ribs for supplying heat from the surroundings to said system.

8. An apparatus according to claim 5, characterized in that the other electrical conductor consists of three coils set up substantially symmetrically in a plane, the magnetic axes of said coils substantially being directed to the centre of said plane, and that the stationary magnetic field is produced by a permanent magnet which is set up in said plane inside the coils, with the magnet axis of the permanent magnet substantially rectangular to said plane, and in that the coils are equipped to be coupled to an electric three-phase power source so that, in operation, a rotating magnetic field is generated around the axis of the permanent magnet, whereby the one electrical conductor, in which the electromotive force is generated, consists of at least one flat plate, which is set up substantially parallel to the permanent magnet and is provided with a terminal virtually in the centre of the plate lying in the magnet axis of the permanent magnet, and with a terminal near the edge of the plate.

9. An apparatus according to claim 8, characterized in that the at least one flat plate forms part of a can-type body in which the permanent magnet, which is surrounded by an electrically insulating layer, is accomodated.

10. An apparatus according to claim 5, characterized in that the one and the other electrical conductor are two coils set up substantially in a plane inside each other, with the magnet axis of the coil formed by the other conductor substantially being rectangular to said plane, and that the stationary magnetic field is produced by two permanent magnets set up on either side of said plane, with their magnet axes being opposite to each other in a direction rectangular to said plane along or virtually along the magnet axis of the coil formed by the other conductor.

11. An apparatus according to claim 10, characterized in that the system of both coils and permanent magnets is held in a supporting structure which, on either side near each of the permanent magnets, is provided with a metallic plate having transverse ribs for supplying heat from the surroundings to said system.

12. An apparatus according to claim 4, characterized by an annular permanent magnet and a plate-type electrical conductor substantially parallel to a pole face of said magnet, said plate having a terminal virtually in the centre thereof lying in the axis of the permanent magnet, and a terminal near its edge, the magnetic flux variations being obtained because the magnetic force lines of the permanent magnet are at an angle to the normal to the pole face, which is not equal to zero, such that the emerging magnetic flux in and near the plate-type electrical conductor comes to rotation and turbulency for generating an electromotive force in said electrical conductor.

13. An apparatus according to claim 12, characterized in that a ferrite disc is provided between the pole face and the plate-type electrical conductor to amplify the magnetic flux variations.

14. An apparatus according to claim 4, characterized by a series circuit of a signal generator and an energy absorption transformer, said transformer having a primary resonance coil, a secondary energy supply coil and a magnetic medium as a transformer core, an electrical signal being supplied, in operation, by the signal generator to the primary resonance coil such that in the magnetic medium a magnetic core resonance is produced for generating an electromotive force in the secondary energy supply coil.

15. An apparatus according to claim 14, characterized in that the width of the primary resonance coil is as small as possible and the width of the secondary energy supply coil is as large as possible.

16. An apparatus according to claim 14 or 15, characterized in that the transformer core is provided with ribs for supplying kinetic energy from the surroundings.

17. An apparatus according to claim 14-16, characterized in that in series with the energy absorption transformer after the same a frequency converter is provided, the output of which is coupled back to the input of the signal generator such that a independent energy source is produced after initial activating.

18. An apparatus according to claim 4, characterized by a hybrid energy absorption transformer having at least one superconducting wire as primary winding and at least one non-superconducting wire as secondary winding, and a magnetic or magnetizable medium as transformer core connecting these two windings inductively to each other, whereby, in operation, energy absorption from the surroundings and subsequent energy conversion is brought about by electromagnetic induction in the secondary winding.

19. An apparatus according to claim 18, characterized in that the primary winding of the energy absorption transformer is connected to the secondary winding of a usual electrical transformer, whereby in operation, an electrical signal is supplied to the primary winding of said usual electrical transformer for activating the absorption transformer.

fig-1

fig-2

fig-3

fig-4a

$N_w$      $N_r$

$S_p$     S   N     $N_p$

$S_r$      $S_w$

fig-4b

$S_r$      $S_w$

$S_p$     S   N     $N_p$

$N_w$      $N_r$

fig-5

C

A             B

fig-6

fig-7

fig-8

fig-9

fig-10

fig-11

fig-12

fig-13a

XIIb                    XIIb

fig-13b

+        56

−        57

N        N

S        S

MA

52

54
53
55
51

fig-14a

fig-14b

# fig-15

73   74   75

71   72

# fig-16a

XVI b

XVI b

# fig-16b

W2

77   76   79

78

W1

# fig-17

# fig-18a    fig-18b

European. Patent Office

**PARTIAL EUROPEAN SEARCH REPORT**
which under Rule 45 of the European Patent Convention shall be considered, for the purposes of subsequent proceedings, as the European search report

Application number

EP 88 20 0715

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 753 491 (SPRINGMANN) | | H 02 N 11/00 |
| | * Pages 2-8; figure * | 1,3 | |
| Y | | 2,4-6, 10 | |
| A | | 7,11, 16 | |
| | -- | | |
| Y | FR-A-1 472 974 (DAEDALOS) | | |
| | * Pages 1-11; figures 1-15 * | 2,4,5, 10 | |
| | -- | | |
| Y | FR-A-991 932 (ASEA) | | |
| | * Pages 1,2; figures 1,2 * | 6 | |
| A | | 8 | |
| | -- | | |
| A | CH-A-359 774 (NIEPENBERG) | | TECHNICAL FIELDS SEARCHED (Int. Cl.4) |
| | * Page 3, lines 5-38; figure 5 * | 8 | |
| | -- | | |
| | ./. | | H 02 N |
| | | | H 01 F |

### INCOMPLETE SEARCH

The Search Division considers that the present European patent application does not comply with the provisions of the European Patent Convention to such an extent that it is not possible to carry out a meaningful search into the state of the art on the basis of some of the claims.

Claims searched completely: 1-19
Claims searched incompletely:
Claims not searched:
Reason for the limitation of the search:

This application is based on misconceptions of physical laws.
Page 4, lines 13-21 of the description:
Energy is a scalar quantity, not a vector.

Page 6, lines 2-6 of the description:
The magnitude of the induced electromotive force is proportional to the derivative of the magnetic flux (i.e. d Ø/dt) and not to the magnetic flux itself (i.e. Ø). Nevertheless the search has been complete.

| Place of search | Date of completion of the search | Examiner |
|---|---|---|
| The Hague | 21-06-1988 | TIO |

EPO Form 1505.1 : 03.82

| | DOCUMENTS CONSIDERED TO BE RELEVANT | | CLASSIFICATION OF THE APPLICATION (Int. Cl.4) |
|---|---|---|---|
| Category | Citation of document with indication, where appropriate, of relevant passages | Relevant to claim | |
| A | FR-A-1 048 081 (PHILIPS)<br>* Pages 1-5; figures 1-10 * | 9,12,<br>13 | |
| | -- | | |
| A | FR-A-540 979 (DANYEL DE BEAUPRE)<br>* Page 1, line 1 - page 3, line 57;<br>figures 1-5 * | 14,15,<br>17,19 | |
| | -- | | |
| A | FR-A-2 391 542 (GREZE)<br>* Page 1, line 1 - page 3, line 37;<br>figures 1,2 * | 18,19 | |
| | ---- | | TECHNICAL FIELDS SEARCHED (Int. Cl.4) |